# FASCICULE DE BREVET EUROPEEN

(11) **EP 0 801 283 B1**
(45) Date de publication et mention de la délivrance du brevet: **19.06.2002**
(21) Numéro de dépôt: 97105401.0
(22) Date de dépôt: 01.04.1997
(51) Int. Cl.: F28D 9/00, F01M 5/00

(54) **Echangeur de chaleur à lames pour le refroidissement d'huile**
Lamellenwärmetauscher um Öl zu kühlen
Laminated heat exchanger for cooling oil

(30) Priorité: 10.04.1996 FR 9604470
(43) Date de publication de la demande: 15.10.1997
(73) Titulaire: VALEO THERMIQUE MOTEUR, 78320 Le Mesnil Saint-Denis (FR)
(72) Inventeur: Laudic, Hélène, 92600 Asnieres (FR)
(74) Mandataire: Rousset, Jean-Claude

(56) Documents cités:
- EP-A- 0 547 950
- DE-A- 3 317 008
- US-A- 4 708 199

## Description

L'invention concerne un échangeur de chaleur à lames pour le refroidissement d'huile comprenant un filtre à huile, en particulier pour le refroidissement de l'huile de lubrification, c'est-à-dire de l'huile du moteur et/ou de l'huile de la boîte de vitesses, d'un véhicule automobile.

On connaît déjà, en particulier d'après FR-A-2 214 873, un échangeur de chaleur à lames comprenant une pile de demi-lames assemblées pour former des premières chambres pour la circulation de l'huile à refroidir et des secondes chambres pour la circulation d'un liquide de refroidissement, cette pile comprenant une première extrémité propre à être fixée à un bâti, par exemple au bloc d'un moteur à combustion interne, et une seconde extrémité propre à recevoir un filtre à huile.

Le document US-A-4 708 199 décrit également un tel échangeur.

Dans les échangeurs de chaleur connus de ce type, que l'on appelle encore "échangeurs huile-eau", le filtre à huile, jetable ou remplaçable, est formé d'un boîtier métallique logeant intérieurement un milieu filtrant.

Ainsi, lorsque le filtre à huile doit être remplacé lors d'une vidange du moteur, on jette à la décharge le filtre à huile qui comprend, de façon indissociable, le boîtier métallique et le milieu filtrant.

Dans les échangeurs connus du type précité, le filtre à huile est fixé de manière amovible par l'intermédiaire d'une vis creuse comportant deux extrémités filetées, dont l'une est fixée au bloc moteur et dont l'autre sert à la fixation du filtre à huile. Cette vis creuse sert de tube central pour l'empilement des demi-lames, lesquelles sont réalisées sous la forme de plaques généralement circulaires assemblées les unes aux autres et comportant chacune une ouverture centrale pour le passage du tube central et des ouvertures pour permettre la circulation de l'huile et du liquide de refroidissement dans les chambres précitées.

Par ailleurs, dans ces échangeurs de chaleur connus, les demi-lames sont habituellement logées à l'intérieur d'un boîtier qui comprend une tubulure d'entrée et une tubulure de sortie pour le liquide de refroidissement.

Ces échangeurs de chaleur connus ont pour inconvénient de présenter un encombrement important, et de nécessiter un nombre élevé de pièces, ce qui augmente le coût.

Par ailleurs, du fait que le filtre à huile à jeter après usage comprend un boîtier métallique et un milieu filtrant qui doivent être jetés en pure perte, ils ne sont pas satisfaisants pour la protection de l'environnement.

De plus, compte ténu du fait que le filtre à huile est fixé de façon amovible à la pile de demi-lames qui forment l'échangeur de chaleur proprement dit, il en résulte des risques de fuites d'huile à l'interface filtre/échangeur.

L'invention a notamment pour but de surmonter les inconvénients précités.

Elle propose, à cet effet, un échangeur de chaleur à lames selon la revendication 1.

Ainsi, l'enveloppe cylindrique forme avec l'échangeur de chaleur proprement dit un ensemble monobloc, encore appelé "module", qui intègre les fonctions refroidissement et filtration de l'huile. Il en résulte que cet échangeur de chaleur, ainsi que l'enveloppe cylindrique et son couvercle, appartiennent à vie au véhicule automobile sur lequel ils sont montés.

Il en résulte qu'il est seulement nécessaire de remplacer la cartouche filtrante à l'occasion d'une vidange du moteur du véhicule.

Du fait que cette cartouche est dépourvue de boîtier et constituée essentiellement d'un milieu filtrant, tel que du papier ou analogue, il est particulièrement aisé de s'en débarrasser, par exemple de l'incinérer.

Par ailleurs, du fait que cette enveloppe cylindrique est solidaire de la pile de demi-lames, on évite tout risque de fuite d'huile puisqu'il n'existe plus d'interface entre l'échangeur de chaleur et le filtre.

Selon une autre caractéristique de l'invention, l'enveloppe cylindrique est brasée directement sur la pile de demi-lames à sa seconde extrémité.

Avantageusement, les demi-lames sont emboîtées les unes sur les autres et assemblées entre elles par brasage.

Ainsi, le module formé par l'échangeur de chaleur proprement dit et l'enveloppe cylindrique constitue un ensemble monobloc assemblé par brasage.

Selon une autre caractéristique de l'invention, chaque demi-lame, à l'exception d'une demi-lame d'extrémité spécifique, encore appelée "coupelle", formant la seconde extrémité de la pile, comporte une entrée d'huile, une sortie d'huile, une entrée de liquide de refroidissement, une sortie de liquide de refroidissement et un passage de retour d'huile.

Ce passage de retour d'huile est avantageusement une ouverture circulaire placée au centre de chaque demi-lame.

Ces ouvertures circulaires, une fois alignées, délimitent un passage ou canal central pour le retour de l'huile, qui a été filtrée par la cartouche, vers le moteur.

L'échangeur de chaleur proprement dit peut être réalisé sans boîtier extérieur, ce qui permet de supprimer la vis creuse centrale.

Toutefois, le passage ou canal central est nécessaire pour permettre le retour de l'huile, préalablement filtrée, vers le moteur. Du fait de la suppression de la vis creuse centrale, le canal ou passage central peut avoir un diamètre plus faible que le canal des échangeurs de chaleur de la technique antérieure, ce qui permet une augmentation de la surface d'échange du côté refroidissement.

L'échangeur de chaleur de l'invention présente en outre l'avantage qu'il est possible d'ajouter une ou plusieurs lames pour augmenter la hauteur de la pile et la capacité d'échange calorifique.

Du fait que l'enveloppe extérieure de l'échangeur est formée par l'empilage de demi-lames emboîtées les unes dans les autres, cette réalisation permet de simplifier la fabrication. En effet, il n'est pas nécessaire de prévoir à chaque fois un boîtier spécifique en fonction du nombre de lames composant l'échangeur de chaleur.

En outre, cette réalisation permet d'offrir plus de surface d'échange en périphérie.

Selon une autre caractéristique de l'invention, la demi-lame d'extrémité, encore appelée "coupelle", prévue à la seconde extrémité de la pile, comprend une sortie d'huile et un passage de retour d'huile.

Les demi-lames constituant la pile de l'échangeur de chaleur sont avantageusement de configuration circulaire.

L'enveloppe cylindrique destinée à loger la cartouche filtrante est avantageusement formée à partir d'une tôle emboutie.

Cette enveloppe cylindrique comporte de préférence une collerette pour la fixation à la pile de demi-lames.

Selon une autre caractéristique de l'invention, cette enveloppe cylindrique comporte en outre un rebord annulaire entourant la face ouverte et muni d'une gorge annulaire pour loger un joint d'étanchéité susceptible d'être comprimé par le couvercle.

Selon une autre caractéristique de l'invention, l'échangeur de chaleur comprend une plaque de base solidaire de la pile de demi-lames à sa première extrémité et propre à être fixée au bâti, par exemple au carter du moteur, avec interposition d'un joint d'étanchéité.

Cette plaque de base, qui peut être par exemple une pièce de fonderie, comprend avantageusement des moyens de fixation situés à l'extérieur de la pile de demi-lames.

Cette plaque de base permet une adaptation sur le moteur, selon les contraintes spécifiques d'encombrement, ainsi que l'alimentation en liquide de refroidissement et en huile.

Avantageusement, la cartouche filtrante est un élément cylindrique à section annulaire présentant un passage cylindrique central et comprenant un milieu filtrant tel que du papier.

Dans la description qui suit, faite seulement à titre d'exemple, on se réfère au dessin annexé, sur lequel :
- la figure 1 est une vue en coupe transversale d'un échangeur de chaleur selon l'invention; et
- la figure 2 est une vue en coupe selon la ligne brisée II-II de la figure 1.

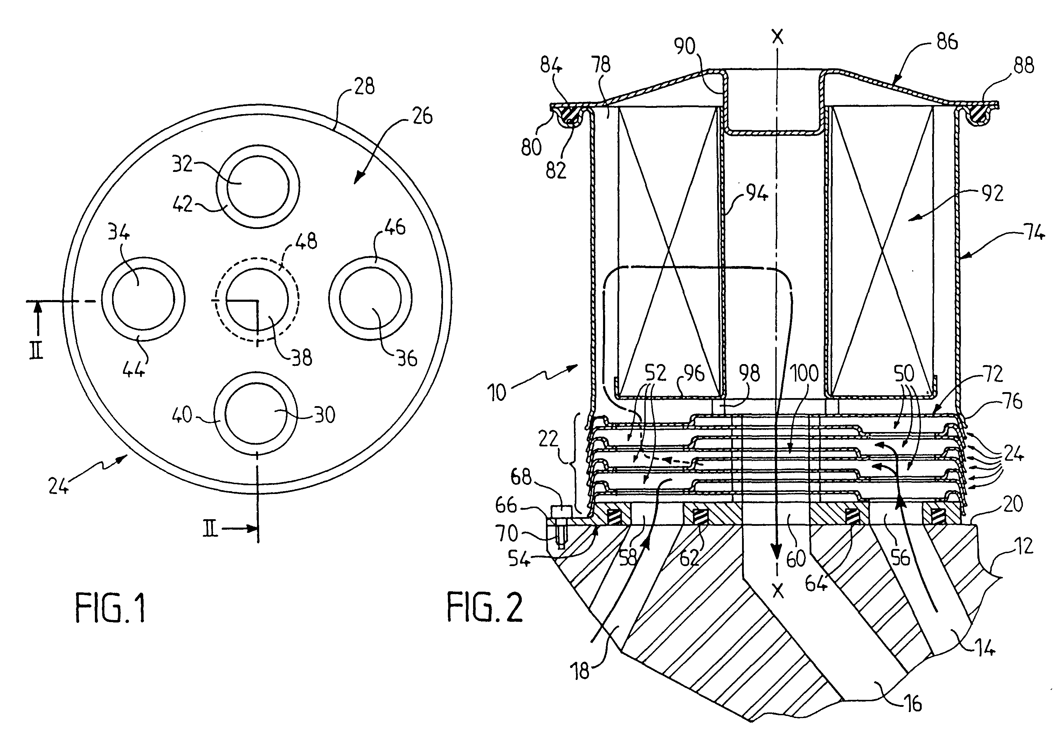

On se réfère tout d'abord à la figure 2 qui représente un échangeur de chaleur 10 selon l'invention destiné au refroidissement de l'huile du moteur d'un véhicule automobile. Cet échangeur de chaleur est fixé sur une pièce de fonderie 12 qui peut faire partie intégrante du bloc du moteur ou être fixée à ce dernier. Cette pièce de fonderie comprend, dans l'exemple, un conduit 14 d'entrée d'huile, un conduit 16 de sortie d'huile, un conduit 18 d'entrée de liquide de refroidissement (par exemple de l'eau) et un conduit de sortie de liquide de refroidissement (non visible sur le dessin). Ces quatre conduits débouchent tous sur une face 20 de la pièce 12, sur laquelle est fixé l'échangeur 10 de la manière décrite plus loin.

L'échangeur 10 comprend une pile 22 de demi-lames 24 assemblées entre elles suivant une direction d'empilement X-X. La pile 22 est formée à partir de demi-lames 24 (figure 1) identiques emboîtées les unes sur les autres. Chaque demi-lame 24, encore appelée "plaque", comporte un fond plan 26 généralement circulaire, entouré par un rebord périphérique 28. Chaque demi-lame 24 comporte une ouverture circulaire 30 d'entrée d'huile, une ouverture circulaire opposée 32 de sortie d'huile, une ouverture circulaire 34 d'entrée de liquide de refroidissement et une ouverture circulaire 36 de sortie de liquide de refroidissement. Les ouvertures 30 et 32 sont disposées de façon diamétralement opposée, de même que les ouvertures 34 et 36. La demi-lame comporte en outre une ouverture centrale circulaire 38 pour former un retour d'huile.

Les ouvertures 30, 32 et 38 ou 34, 36 et 38 sont entourées respectivement par des rebords en saillie 40, 42 et 48 ou 44, 46 et 28 (les demi-lames 24 sont décalées angulairement de 90° les unes par rapport aux autres). Lorsque les demi-lames 24 sont empilées, leurs bords respectifs 28 s'emboîtent les uns dans les autres pour former la pile 22 et les rebords 40 à 48 viennent en appui contre une demi-lame adjacente de la pile.

Les demi-lames forment ainsi des premières chambres 50 pour la circulation de l'huile, lesquelles communiquent avec l'entrée d'huile 14 (figure 2). Elles forment également des secondes chambres 52, disposées de façon alternée avec les premières chambres 50, pour la circulation du liquide de refroidissement. Ces chambres 52 sont en communication avec le conduit d'entrée de liquide de refroidissement 18 et le conduit de sortie de liquide de refroidissement (non représenté). Ainsi, l'huile qui circule dans les chambres 50 est refroidie par échange thermique avec le liquide qui circule dans les chambres 52.

Les demi-lames 24 sont assemblées entre elles par brasage et assemblées également à une plaque de base 54 prévue à une première extrémité de la pile 22, située du côté de la pièce de fonderie 12 (figure 2). Cette plaque de base 54 comprend cinq ouvertures circulaires en correspondance des ouvertures 30, 32, 34, 36 et 38 de chaque demi-lame 24. Sur la figure 2, on aperçoit seulement une ouverture 56 d'entrée d'huile, une ouverture 58 d'entrée d'eau et une ouverture centrale 60 de retour d'huile. La plaque de base 54 comporte des gorges annulaires tournées du côté de la pièce 12 pour loger des joints annulaires d'étanchéité, par exemple 62, 64, assurant l'étanchéité du raccordement avec la surface 20.

La plaque 54 se prolonge par des pattes radiales ou oreilles 66 susceptibles d'être traversées chacune par une vis 68 venant coopérer avec un alésage 70 de la pièce de fonderie. Ainsi, l'échangeur 10 est fixé à la pièce de fonderie 12 par des moyens de fixation situés à l'extérieur de la pile.

La pile 22 comprend, à sa seconde extrémité, une demi-lame d'extrémité 72, de structure particulière, encore appelée "coupelle", qui comprend seulement une ouverture centrale 38 et une ouverture de sortie d'huile (non visible sur la figure 2), dotée d'un clapet.

L'échangeur de chaleur comprend en outre une enveloppe cylindrique 74 prolongeant la pile de demi-lames à sa seconde extrémité. Cette enveloppe 74 a une forme générale cylindrique d'axe X-X. Elle est formée à partir d'une tôle emboutie qui comprend une collerette 76 pour la fixation de l'enveloppe, par brasage, à la coupelle 72, et donc à la pile 22. Il en résulte que l'enveloppe 74 forme un ensemble monobloc, ou module, avec la pile 22 constituant l'échangeur de chaleur proprement dit.

Par ailleurs, cette enveloppe 74 comporte une face ouverture 78 entourée par un rebord annulaire 80 muni d'une gorge annulaire 82 pour loger un joint d'étanchéité 84.

La face ouverte 78 de l'enveloppe peut être fermée par un couvercle 86 comportant un bord annulaire périphérique 88 propre à coopérer à étanchéité avec le joint 84 et un prolongement intérieur cylindrique 90 d'axe X-X. Des moyens de verrouillage (non représentés) sont prévus pour assurer le maintien du couvercle 86 par rapport à l'enveloppe 74. L'enveloppe 74 définit un logement pour recevoir une cartouche filtrante remplaçable 92 formée essentiellement d'un milieu filtrant, par exemple en papier, et présentant une structure cylindrique de section annulaire. Cette cartouche cylindrique comporte un fût intérieur 94 dans lequel vient s'engager en partie le prolongement 90 du couvercle. Ce fût 94 se prolonge par un anneau de base 96 propre à reposer sur une butée annulaire 98 prévue sur la coupelle 72.

L'échangeur 10 fonctionne de la manière suivante. Lorsque l'huile est froide et visqueuse, elle pénètre dans l'échangeur par le conduit 18 et, sous l'effet de la viscosité élevée de l'huile, il en résulte une élévation de la pression qui provoque l'ouverture du clapet (non représenté). L'huile traverse directement l'échangeur de chaleur, traverse ensuite la cartouche filtrante 92 et revient vers le bloc moteur par le canal central 100 formé à l'intérieur de l'échangeur.

Lorsque l'huile est chaude et fluide, le clapet précité est fermé. L'huile est alors distribuée dans les chambres 50, traverse ensuite la cartouche filtrante 92 et revient au bloc moteur par le canal central 100 et le conduit 16.

Lorsque, à l'occasion d'une vidange, on souhaite remplacer la cartouche de filtration 92, il suffit d'enlever le couvercle 86, puis la cartouche 92 et de la remplacer par une cartouche neuve et remettre le couvercle en place.

Il en résulte que l'échangeur de chaleur 10, ainsi que l'enveloppe cylindrique 74 et le couvercle 86, sont montés à vie sur le véhicule. Seule la cartouche filtrante 92, pour l'essentiel constituée de papier ou autre matériau filtrant analogue, est à remplacer.

Par ailleurs, du fait que l'enveloppe 74 est monobloc avec la pile de demi-lames, ceci supprime toute interface entre l'échangeur et le filtre, et donc tout risque de fuite.

En outre, dans la forme de réalisation représentée, l'échangeur de chaleur proprement dit ne comporte pas de boîtier extérieur, ni de vis creuse intérieure, comme dans les formes de réalisation antérieures, ce qui permet de diminuer le diamètre des ouvertures centrales 38 et d'optimiser l'échange thermique.

Cet échangeur de chaleur peut en outre être réalisé avec un nombre plus ou moins élevé de demi-lames en fonction de la capacité de refroidissement à procurer, et cela sans nécessiter de pièces spécifiques pour chaque type d'échangeur de chaleur.

Ainsi, l'enveloppe cylindrique destinée à loger la cartouche filtrante pourrait être réalisée d'une seule pièce avec un boîtier d'échangeur de chaleur logeant la pile de demi-plaques.

L'échangeur de chaleur de l'invention peut être ainsi utilisé pour le refroidissement de l'huile de lubrification d'un véhicule automobile.

## Revendications

1. Echangeur de chaleur à lames pour le refroidissement d'huile, comprenant un filtre à huile, une pile (22) de demi-lames (24) assemblées pour former des premières chambres (50) pour la circulation de l'huile à refroidir et des secondes chambres (52) pour la circulation d'un liquide de refroidissement, cette pile (22) comprenant une première extrémité propre à être fixée à un bâti (12) et une seconde extrémité propre à recevoir le filtre à huile,
**caractérisé en ce que** le filtre à huile comprend une enveloppe cylindrique (74) réalisée monobloc avec l'échangeur de chaleur (10), **en ce que** cette enveloppe (74) prolonge la pile (22) de demi-lames (24) à sa seconde extrémité, cette enveloppe (74) logeant une cartouche filtrante remplaçable (92) et comportant une face ouverte (78) fermée par un couvercle (86), et **en ce que** ce couvercle (86) comporte un prolongement intérieur cylindrique (90) qui s'engage en partie dans un passage cylindrique central (94) de la cartouche filtrante (92).

2. Echangeur de chaleur selon la revendication 1, **caractérisé en ce que** l'enveloppe cylindrique (74) est brasée directement sur la pile (22) de demi-lames (24) à sa seconde extrémité.

3. Echangeur de chaleur selon l'une des revendications 1 et 2, **caractérisé en ce que** les demi-lames (24) sont emboîtées les unes sur les autres et assemblées entre elles par brasage.

4. Echangeur de chaleur selon l'une des revendications 1 à 3, **caractérisé en ce que** chaque demi-lame (24), à l'exception d'une demi-lame d'extrémité spécifique (72), encore appelée "coupelle", formant la seconde extrémité de la pile (22), comporte une ouverture d'entrée d'huile (30), une ouverture de sortie d'huile (32), une ouverture d'entrée de liquide de refroidissement (34), une ouverture de sortie de liquide de refroidissement (36) et un passage de retour d'huile (38).

5. Echangeur de chaleur selon la revendication 4, **caractérisé en ce que** le passage de retour d'huile (38) est une ouverture circulaire placée au centre de la demi-lame (24).

6. Echangeur de chaleur selon la revendication 5, **caractérisé en ce que** la demi-lame d'extrémité (72), encore appelée "coupelle", comporte une sortie d'huile (32) et un passage de retour d'huile (38).

7. Echangeur de chaleur selon l'une des revendications 1 à 6, **caractérisé en ce que** les demi-lames (24) sont de configuration générale circulaire.

8. Echangeur de chaleur selon l'une des revendications 1 à 7, **caractérisé en ce que** l'enveloppe cylindrique (74) est formée à partir d'une tôle emboutie.

9. Echangeur de chaleur selon l'une des revendications 1 à 8, **caractérisé en ce que** l'enveloppe cylindrique (74) comporte une collerette (76) pour la fixation à la pile (22) de demi-lames (24).

10. Echangeur de chaleur selon l'une des revendications 1 à 9, **caractérisé en ce que** l'enveloppe cylindrique (74) comporte un rebord annulaire (80) entourant la face ouverte (78) et muni d'une gorge annulaire (82) pour loger un joint d'étanchéité (84) susceptible d'être comprimé par le couvercle (86).

11. Echangeur de chaleur selon l'une des revendications 1 à 10, **caractérisé en ce qu'**il comprend une plaque de base (54) solidaire de la pile (22) de demi-plaques (24) à sa première extrémité et propre à être fixée au carter (12) avec interposition d'au moins un joint d'étanchéité (62, 64).

12. Echangeur de chaleur selon la revendication 11, **caractérisé en ce que** la plaque de base (54) comprend des moyens de fixation (66, 68) situés à l'extérieur de la pile (22).

13. Echangeur de chaleur selon l'une des revendications 1 à 12, **caractérisé en ce que** la cartouche filtrante (92) est un élément cylindrique à section annulaire présentant un passage cylindrique central (94) et formé essentiellement d'un milieu filtrant en papier ou analogue.

## Patentansprüche

1. Wärmetauscher mit Lamellen zur Kühlung von Öl, mit einem Ölfilter, einem Stapel (22) von Halblamellen (24), die zusammengebaut sind, um erste Kammern (50) zur Zirkulation des zu kühlenden Öls und zweite Kammern (52) zur Zirkulation einer Kühlflüssigkeit zu bilden, wobei dieser Stapel (22) ein erstes Ende aufweist, das an einem Aufbau (12) befestigt werden kann, und ein zweites Ende aufweist, das an den Ölfilter anschließen kann,
**dadurch gekennzeichnet, daß** der Ölfilter ein zylindrisches Gehäuse (74) umfaßt, das als Monoblock mit dem Wärmetauscher (10) ausgeführt ist, daß dieses Gehäuse (74) den Stapel (22) von Halblamellen (24) an seinem zweiten Ende verlängert, wobei dieses Gehäuse (74) einen austauschbaren Filtereinsatz (92) aufnimmt und eine offene Seite (78) aufweist, die durch ein Deckel (86) abgeschlossen ist, und daß dieser Deckel (86) eine innere, zylindrische Verlängerung (90) aufweist, die teilweise in eine mittlere, zylindrische Durchführung (94) des Filtereinsatzes (92) eingreift.

2. Wärmetauscher nach Anspruch 1, **dadurch gekennzeichnet, daß** das zylindrische Gehäuse (74) direkt auf den Stapel (22) von Halblamellen (24) an seinem zweiten Ende gelötet ist.

3. Wärmetauscher nach einem der Ansprüche 1 und 2, **dadurch gekennzeichnet, daß** die Halblamellen (24) schachtelartig aufeinandergesetzt und miteinander durch Löten verbunden sind.

4. Wärmetauscher nach einem der Ansprüche 1 bis 3, **dadurch gekennzeichnet, daß** jede Halblamelle (24), mit Ausnahme einer speziellen End-Halblemalle (72), auch "Kapsel" genannt, die das zweie Ende des Stapels (22) bildet, eine Öleintrittsöffnung (30), eine Ölaustrittsöffnung (32), eine Eintrittsöffnung (34) für die Kühlflüssigkeit, eine Austrittsöffnung (36) für die Kühlflüssigkeit und eine Ölrücklaufdurchführung (38) aufweist.

5. Wärmetauscher nach Anspruch 4, **dadurch gekennzeichnet, daß** die Ölrücklaufdurchführung (38) eine kreisförmige Öffnung ist, die in der Mitte der Halblamelle (24) angeordnet ist.

6. Wärmetauscher nach Anspruch 5, **dadurch gekennzeichnet, daß** die End-Halblamelle (72), auch "Kapsel" genannt, eine Ölaustrittsöffnung (32) und eine Ölrücklaufdurchführung (38) aufweist.

7. Wärmetauscher nach einem der Ansprüche 1 bis 6, **dadurch gekennzeichnet, daß** die Halblamellen (24) eine allgemein kreisförmige Form haben.

8. Wärmetauscher nach einem der Ansprüche 1 bis 7, **dadurch gekennzeichnet, daß** das zylindrische Gehäuse (74) aus tiefgezogenen Blech gebildet ist.

9. Wärmetauscher nach einem der Ansprüche 1 bis 8, **dadurch gekennzeichnet, daß** das zylindrische Gehäuse (74) einen Kragen (76) zur Befestigung an dem Stapel (22) von Halblamellen (24) aufweist.

10. Wärmetauscher nach einem der Ansprüche 1 bis 9, **dadurch gekennzeichnet, daß** das zylindrische Gehäuse (74) einen ringförmigen, nach außen gebogenen Rand (80) aufweist, der die offene Seite (78) umgibt und mit einer ringförmigen Rille (82) versehen ist, um eine Dichtung (84) aufzunehmen, die durch der Deckel (86) zusammengedrückt werden kann.

11. Wärmetauscher nach einem der Ansprüche 1 bis 10, **dadurch gekennzeichnet, daß** er eine Grundplatte (54) aufweist, die fest mit dem Stapel (22) von Halblamellen (24) an seinem ersten Ende verbunden ist und unter Zwischenfügung von wenigstens einer Dichtung (62, 64) an dem Aufbau (12) befestigt werden kann.

12. Wärmetauscher nach Anspruch 11, **dadurch gekennzeichnet, daß** die Grundplatte (54) Befestigungsmittel (66, 68) aufweist, die außerhalb des Stapels (22) angeordnet sind.

13. Wärmetauscher nach einem der Ansprüche 1 bis 12, **dadurch gekennzeichnet, daß** der Filtereinsatz (92) ein zylindrisches Element mit ringförmigem Querschnitt ist, das eine mittlere, zylindrische Durchführung (94) aufweist und im wesentlichen aus einem filtrierenden Medium aus Papier oder dergleichen gebildet ist.

## Claims

1. Laminated heat exchanger for cooling oil, comprising an oil filter, a stack (22) of half-laminations (24) assembled together to form first chambers (50) for the circulation of the oil to be cooled and second chambers (52) for the circulation of a cooling liquid, this stack (22) comprising a first end suitable for being fixed to a mounting (12) and a second end suitable for receiving the oil filter, **characterised in that** the oil filter comprises a cylindrical casing (74) produced in one piece with the heat exchanger (10), and **in that** this casing (74) extends the stack (22) of half-laminations (24) at its second end, this casing (74) housing a replaceable filter cartridge (92) and including an open face (78) closed by a cover (86), and **in that** this cover (86) includes a cylindrical internal extension (90) which engages partly in a central cylindrical passage (24) of the filter cartridge (92).

2. Heat exchanger according to Claim 1, **characterised in that** the cylindrical casing (74) is brazed directly onto the stack (22) of half-laminations (24) at its second end.

3. Heat exchanger according to either of Claims 1 and 2, **characterised in that** the half-laminations (24) are nested into one another and assembled together by brazing.

4. Heat exchanger according to one of Claims 1 to 3, **characterised in that** each half-lamination (24), with the exception of a specific end half-lamination (72), also called "cup", forming the second end of the stack (22), includes an oil-inlet aperture (30), an oil-outlet aperture (32) a cooling-liquid inlet aperture (34), a cooling-liquid outlet aperture (36) and an oil-return passage (38).

5. Heat exchanger according to Claim 4, **characterised in that** the oil-return passage (38) is a circular aperture placed at the centre of the half-lamination (24).

6. Heat exchanger according to Claim 5, **characterised in that** the end half-lamination (72), also called "cup", includes an oil outlet (32) and an oil-return passage (38).

7. Heat exchanger according to one of Claims 1 to 6, **characterised in that** the half-laminations (24) are of generally circular configuration.

8. Heat exchanger according to one of Claims 1 to 7, **characterised in that** the cylindrical casing (74) is formed from stamped sheet metal.

9. Heat exchanger according to one of Claims 1 to 8, **characterised in that** the cylindrical casing (74) includes a collar (76) for fixing to the stack (22) of half-laminations (24).

10. Heat exchanger according to one of Claims 1 to 9, **characterised in that** the cylindrical casing (74) includes an annular rim (80) surrounding the open face (78) and equipped with an annular groove (82) for accommodating a gasket (84) capable of being compressed by the cover (86).

11. Heat exchanger according to one of Claims 1 to 10, **characterised in that** it comprises a baseplate (54) integral with the stack (22) of half-plates (24) at its first end and suitable for being fixed to the crankcase (12) with the interposition of at least one gasket (62, 64).

12. Heat exchanger according to Claim 11, **characterised in that** the baseplate (54) comprises fixing means (66, 68) situated on the outside of the stack (22).

13. Heat exchanger according to one of Claims 1 to 12, **characterised in that** the filter cartridge (92) is a cylindrical element with annular cross-section featuring a cylindrical central passage (94); and is formed essentially from a filtering medium made of paper or the like.
